(19) **Europäisches Patentamt / European Patent Office / Office européen des brevets**

(11) **EP 2 329 236 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(21) Anmeldenummer: **09782354.6**

(22) Anmeldetag: **28.08.2009**

(51) Int Cl.:
**G01G 3/14** *(2006.01)*  **G01G 23/01** *(2006.01)*
**G01L 25/00** *(2006.01)*

(86) Internationale Anmeldenummer:
**PCT/EP2009/061158**

(87) Internationale Veröffentlichungsnummer:
**WO 2010/023287 (04.03.2010 Gazette 2010/09)**

(54) **VERFAHREN ZUR ZUSTANDSÜBERWACHUNG EINER KRAFTMESSVORRICHTUNG, KRAFTMESSVORRICHTUNG UND KRAFTMESSMODUL**

Method for monitoring the status of a power measuring device, power measuring device and power measuring module

Procédé de surveillance d'état d'un dispositif de mesure de force, dispositif de mesure de force et module de mesure de force

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.08.2008 EP 08163322**

(43) Veröffentlichungstag der Anmeldung:
**08.06.2011 Patentblatt 2011/23**

(73) Patentinhaber: **Mettler-Toledo GmbH**
**8606 Greifensee (CH)**

(72) Erfinder: **TRAUTWEILER, Christoph**
**CH-8105 Regensdorf (CH)**

(74) Vertreter: **Mettler-Toledo**
**IP Department**
**Im Langacher 44**
**8606 Greifensee (CH)**

(56) Entgegenhaltungen:
EP-A- 0 055 633    EP-A- 0 254 594
EP-A- 0 432 979    EP-A- 0 818 669
EP-A- 1 921 428    WO-A-2008/071270
US-A- 5 526 697

**Beschreibung**

Die vorliegende Erfindung betrifft ein Verfahren zur Zustandsüberwachung einer Kraftmessvorrichtung, insbesondere in einer Wägevorrichtung, und eine dazu geeignete Kraftmessvorrichtung und ein geeignetes Kraftmessmodul.

Üblicherweise weist eine Kraftmessvorrichtung zur Bestimmung der auf die Kraftmessvorrichtung einwirkenden Kraft eine Kraftaufnahme, eine Kraftübertragung und einen Messumformer auf. Dabei wird die einwirkende Kraft mittels einer Kraftaufnahme aufgenommen und über die Kraftübertragung an den Messumformer weitergeleitet. Die einwirkende Kraft ergibt sich beispielsweise durch die Gewichtskraft des Wägeguts bei einer Wägevorrichtung. Die Kraftaufnahme dient der Einleitung der einwirkenden Kraft und wird typischerweise in Form einer Messplatte, einer Waagschale oder einer Wägebrücke realisiert. Die Kraftweiterleitung leitet die Kraft von der Kraftaufnahme an den Messumformer weiter und ist beispielsweise als Gestänge, Hebelvorrichtung oder Stützvorrichtung ausgebildet.

Durch den Weg der Kraft von der Kraftaufnahme über die Kraftweiterleitung bis zum Messumformer ergibt sich ein Kraftfluss. Beispielsweise ergibt sich bei einer Waage der Kraftfluss, entsprechend der Richtung der Schwerkraft, d.h. in vertikaler Richtung von oben nach unten.

Der Messumformer bildet einen mechanisch-elektrischen Wandler, welcher die Eingangsgrösse Kraft in ein dazu entsprechendes elektrisches Messsignal umformt. In entsprechender Weise erzeugt der Messumformer bei einer Wägevorrichtung ein elektrisches Messsignal, das zu der vom Wägegut ausgeübten Gewichtskraft korrespondiert. Dieses elektrische Messsignal wird üblicherweise über eine Signalverarbeitungseinheit an eine Anzeigeeinheit oder an eine weitere Verarbeitungsvorrichtung, beispielsweise eine Anlagensteuerung, weitergeleitet.

Um eine hohe Messgenauigkeit zu erreichen, ist es wichtig, dass die durch die Kraftübertragung übertragene Kraft möglichst verlustfrei übertragen wird. Verluste können durch einen mechanischen Kurzschluss, einen sogenannten Kraftnebenschluss entstehen, wenn gewisse Anteile der zu übertragenden Kraft über parasitäre, mechanische Verbindungen abgeleitet werden. Diese Anteile werden dann nicht mehr vom Messumformer erfasst, sodass daraus erhebliche Messfehler entstehen können.

Ein Kraftnebenschluss entsteht wenn bewegliche Teile der Kraftübertragung mit weiteren Gegenständen oder mit Personen in solcher Weise in Berührung kommen, dass die freie Beweglichkeit der Kraftübertragung in der Richtung des Kraftflusses eingeschränkt ist. Dieser Fall tritt beispielsweise dann auf, wenn während des Wägens das bewegliche Gestänge mit einer feststehenden Gestängedurchführung in Kontakt kommt.

Die Beweglichkeit der Kraftübertragung unterscheidet sich von deren Bewegung, indem erstere einen mechanischen Bezug benachbarter Teile und letztere eine räumliche Änderung bezeichnet. Beispielsweise offenbart die EP 0 254 594 eine Wägevorrichtung, bei welcher die bewegliche Kraftübertragung mittels flexibel gelagerter Balken erreicht wird. Auf einem der Balken ist ein Sensor angeordnet, welcher von aussen einwirkende Störungen als abnormale Beschleunigungen detektiert. Dadurch wird allerdings nicht die Beweglichkeit des Balkens also zum Beispiel die Flexibilität seiner Lagerung überwacht. Vielmehr wird diese als gegeben betrachtet und gemäss der Lehre der EP 0 254 594 werden geringere Beschleunigungs-Messwerte als ein geringeres Mass an Störungen gewertet.

Des Weiteren können Staubablagerungen an der Kraftübertragung und an feststehenden Teilen zu sogenannten Staubbrücken führen. Diese Staubbrücken können sich sukzessiv aufbauen und unbemerkt zu Kraftnebenschlüssen und damit zu Fehlmessungen führen.

Aus dem Stand der Technik sind verschiedenste Methoden bekannt, mit denen ein Kraftnebenschluss vermieden werden kann. Beispielsweise offenbart DE 102 53 601 eine Waage, bei der zwischen dem feststehenden Gehäuse und der vertikal beweglichen Kraftübertragung mittels eines von der beweglichen Kraftübertragung weggerichteten Gasstroms in diesem Bereich das Messresultat verfälschende Staubablagerungen vermieden werden können.

US 4,804,053 offenbart eine Kraftmessvorrichtung mit einer Kraftübertragung mittels sogenannter Rocker-Pins oder Schwenklaststützen. Diese Schwenklaststützen haben, bei geeigneter Dimensionierung, die Eigenschaft, dass sie sich selbsttätig in Richtung des Kraftflusses ausrichten. Beispielsweise kann dadurch bei einer Kraftmessvorrichtung für Fahrzeuge erreicht werden, dass die Wägebrücke stets eine in seitlicher Richtung frei bewegliche Position erreicht, obwohl sie normalerweise, beim Einfahren eines zu wiegenden Fahrzeugs, an die seitlichen Arretierungen anschlägt. Durch die stete Ausrichtung der Kraftübertragung in die Richtung des Kraftflusses können sich keine Querkräfte ausbilden und folglich wird ein parasitäres Abfliessen der zu messenden Kraft vermieden.

Während die vorgenannten Vorrichtungen unter normalen Bedingungen gut funktionieren, können sie jedoch unter schwierigen Betriebsbedingungen das Entstehen eines Kraftnebenschlusses nicht mehr oder nur noch in ungenügender Weise verhindern, beispielsweise bei Grenzbelastungen oder Ausnahmesituationen wie unsachgemässer Aufstellung der Kraftmessvorrichtung, fehlerhafte Handhabung oder übermässige Verschmutzung. In Folge können sich trotz der zuvor genannten Massnahmen Kraftnebenschlüsse und damit Fehlmessungen ergeben.

Der vorliegenden Erfindung liegt daher die Aufgabe zugrunde, ein Verfahren zur Zustandsüberwachung einer Kraftmessvorrichtung, insbesondere einer Waage, und eine geeignete Kraftmessvorrichtung anzugeben, mit welchen ein einfacher und kostengünstiger Aufbau und Betrieb der Messvorrichtung erreicht werden kann, bei gleichzeitiger Erfüllung von hohen Anforderungen bezüglich Messgenauigkeit und Stabilität.

Diese Aufgabe wird mit einem Verfahren, einer Kraftmessvorrichtung und einem Kraftmessmodul gelöst, welche die in den unabhängigen Ansprüchen angegebenen Merkmale aufweisen. Vorteilhafte Ausgestaltungen der Erfindung sind in den weiteren, abhängigen Ansprüchen angegeben.

Die Erfindung betrifft ein Verfahren und eine dazu geeignete Vorrichtung zur Überwachung des Zustandes einer Kraftmessvorrichtung, insbesondere einer Wägevorrichtung, die als modulares System mit mindestens zwei Kraftmessmodulen aufgebaut ist, mit einer beweglichen Kraftübertragung, welche eine auf die Kraftmessvorrichtung wirkende Kraft einem Messumformer zuleitet, welcher ein zur einwirkenden Kraft korrespondierendes Messsignal erzeugt, das dann zur Anzeige gebracht oder zur weiteren Verarbeitung weitergeleitet wird. Dabei wird mindestens ein die freie Beweglichkeit der Kraftübertragung oder deren zeitliche Änderung charakterisierender Parameter ermittelt. Der Parameter, mittels dessen ein Normalzustand oder eine Einschränkung der freien Beweglichkeit der Kraftübertragung detektiert wird, wird dann mit mindestens einem Schwellwert verglichen und in Abhängigkeit des Vergleichsergebnisses, d.h. im Falle einer festgestellten Einschränkung der freien Beweglichkeit, wird eine Aktion der Kraftmessvorrichtung ausgelöst. Dadurch können, insbesondere auch unter schwierigen Betriebsbedingungen, Einschränkungen der freien Beweglichkeit der Kraftübertragung auf einfache Weise detektiert, weitergeleitet und dem Benutzer zur Kenntnis gebracht werden. Ferner kann der Aufwand für eine regelmässige und zeitaufwändige manuelle Überprüfung der freien Beweglichkeit reduziert oder gar gänzlich eliminiert werden. Somit ergeben sich Vorteile bezüglich der Messgenauigkeit und der Stabilität der Kraftmessvorrichtung. Des weiteren können Fehler und Verschleisserscheinungen genauer lokalisiert und Wartungsarbeiten besser geplant und effizienter durchgeführt werden. Gegebenenfalls können sich auch weitere Kostenvorteile ergeben, beispielsweise durch entsprechend angepasste Anforderungen an die Reinraumumgebung der Kraftmessvorrichtung. Somit ergibt sich ein einfacher, kostengünstiger Aufbau und Betrieb der Kraftmessvorrichtung.

Erfindungsgemäss wird die Beweglichkeit der Kraftübertragung mit einem entsprechenden Beweglichkeitssensor ermittelt, der einerseits mit der Kraftübertragung mechanisch verbunden und der andererseits mit einem Komparator elektrisch verbunden ist. Unter dem Begriff Beweglichkeitssensor werden alle Arten von Messvorrichtungen verstanden, die zur Bestimmung der Beweglichkeit der Kraftübertragung oder deren Änderung geeignet sind. Somit können sowohl translatorische wie auch rotatorische oder winkelabhängige Bewegungen erfasst werden. Dementsprechend kann auch der Parameter sowohl eine translatorische, eine rotatorische oder winkelabhängige Bewegungen der Kraftübertragung als auch deren Änderung charakterisieren.

Der Beweglichkeitssensor kann auf unterschiedlichen Messprinzipien basieren und in unterschiedlichen Ausführungsformen ausgebildet sein. Beispielsweise kann die Beweglichkeit durch eine Geschwindigkeitsmessung, durch Messung einer Geschwindigkeitskomponente, eine Wegmessung und/oder eine Winkelmessung mit anschliessender Differenzierung bezüglich der Zeit, einer Beschleunigungsmessung oder durch Messung einer Beschleunigungskomponente erfasst werden.

Des weiteren kann der Beweglichkeitssensor auf dem Prinzip der Trägheitsmessung oder auf der Richtungsbestimmung einer auf den Beweglichkeitssensor einwirkenden Kraft, insbesondere der Gravitationskraft, basieren. Beispielsweise kann die Beweglichkeit aus einer Positionsmessung der Auslenkung eines Pendels oder einer Flüssigkeit ermittelt werden.

Durch den Komparator wird der ermittelte Parameter mit mindestens einem Schwellwert verglichen. Einer oder mehrere Schwellwerte können im Komparator gespeichert sein oder von einer weiteren Einheit, beispielsweise einer Speichereinheit oder einem Prozessor zur Verfügung gestellt werden. Die Schwellwerte können aus Regelwerken wie nationalen oder internationalen Normen stammen, aus Vergleichsmessungen ermittelt oder vom Hersteller der Kraftmessvorrichtung festgelegt worden sein.

Die Erfindung ist besonders vorteilhaft bei Kraftmessvorrichtungen in schwierigen Betriebsumgebungen mit hohem Risiko eines möglicherweise unbemerkten Kraftnebenschlusses, beispielsweise bei Schieflage, instabiler Aufstellung oder Positionsänderung der Kraftmessvorrichtung, in einer staubhaltigen Atmosphäre, bei starker Verschmutzung der Wägevorrichtung oder bei einem unsachgemässen Kontakt der beweglichen Teile, insbesondere der Waagschale, mit Gegenständen oder Personen. Insbesondere ist die erfindungsgemässe Überwachung dann vorteilhaft, wenn die Gefahr eines Kraftnebenschlusses nur vorübergehend gegeben und daher durch eine manuelle Kontrolle kaum zu erkennen ist.

Ferner ergeben sich grosse Vorteile bei einem Ausseneinsatz, beispielsweise bei Wägevorrichtungen für Fahrzeuge, da dort Umwelteinflüsse wie Temperaturänderungen oder Anlagerungen von Schmutz, Eis und Schnee bei der Wägevorrichtung auftreten können. Zudem können sich diese Umwelteinflüsse in kurzer Zeit sehr stark ändern, sodass bei diesen Situationen die Gefahr eines unbemerkten oder zu spät bemerkten Kraftnebenschlusses verstärkt vorhanden ist. Durch das erfindungsgemässe Verfahren kann jedoch ein Kraftnebenschluss effizient und frühzeitig erkannt werden.

Bei Schwenklaststützen kann sich ein Verschleiss durch Abnutzung der Kontaktflächen ergeben. Die Schwenklaststützen sind dann nicht mehr in der Lage sich korrekt auszurichten, sodass sich Querkräfte und damit Kraftnebenschlüsse ausbilden können. Auch diese Abnützungen können mit dem erfindungsgemässen Verfahren und der entsprechenden Vorrichtung erfasst werden.

Des Weiteren können Schwenklaststützen die auftretenden Querkräfte nur bis zu einer gewissen Grenze kompensieren, nämlich bis zu dem Punkt bei dem die Kraftaufnahme die seitlichen Anschläge erreicht und somit trotz der Schwenklaststützen ein Kraftnebenschluss entsteht. Diese Situationen können mit der Erfindung zuverlässig erkannt werden ohne dass eine stete manuelle Überprüfung der Kraftmessvorrichtung nötig wäre.

Das erfindungsgemässe Verfahren kann auf sehr unterschiedliche Kraftmessvorrichtungen angewendet werden, deren Messumformer auf den verschiedensten Prinzipien beruhen können, beispielsweise auf der Messung mittels Dehnmessstreifen, mittels kapazitiver, induktiver oder piezo-elektrischer Sensoren oder mittels der Messung der Kompensationskraft bei kraftkompensierten Kraftmessvorrichtungen.

In einer vorteilhaften Ausgestaltung der Erfindung wird mit dem Parameter im wesentlichen die translatorische Geschwindigkeit und/oder die Winkelgeschwindigkeit und/oder die translatorische Beschleunigung und/oder die Winkelbeschleunigung und/oder die Bewegungsenergie, insbesondere die spezifische Winkelenergie, der Kraftübertragung charakterisiert. Vorzugsweise ist der Beweglichkeitssensor zur Erfassung der entsprechenden Grössen ausgebildet, da dann das Signal des Beweglichkeitssensors möglichst früh auf aussagekräftige Daten reduziert werden kann. In einem solchen Fall kann die Übertragung von weniger relevanten Daten, beispielsweise des Neigungswinkels oder die absolute Position der Kraftübertragung, vermieden werden. Des Weiteren kann der Parameter zur Charakterisierung der Beweglichkeit auch aus statistischen Auswertungen des Signals des Beweglichkeitssensors, beispielsweise aus der Varianz des gemessenen Signals, ermittelt werden.

In einer bevorzugten Ausgestaltung der Erfindung wird mit dem die Beweglichkeit charakterisierenden Parameter die Beweglichkeit in mindestens einer Richtung charakterisiert, welche im Wesentlichen orthogonal zur Richtung des Kraftflusses in der Kraftübertragung ausgerichtet ist. Vorzugsweise ist auch der Beweglichkeitssensor zur Erfassung der Beweglichkeit in dieser Richtung ausgebildet. Durch diese Einschränkung kann der Beweglichkeitssensor einfacher und kostengünstiger gestaltet werden.

In einer weiteren vorteilhaften Ausgestaltung ist der Schwellwert vorgegeben und/oder bei einem Nicht-Erreichen oder bei einem Überschreiten oder bei einem Unterschreiten des Schwellwertes wird eine Aktion der Kraftmessvorrichtung ausgelöst. Dadurch wird sichergestellt, dass stets vorgegebene Kriterien erfüllt werden, beispielsweise dass stets eine minimale Beweglichkeit der Kraftübertragung vorhanden ist. Durch eine geeignete Wahl des Schwellwerts kann somit die Gefahr eines unbemerkten Kraftnebenschlusses weitgehend ausgeschlossen werden.

In einer weiteren erfindungsgemässen Ausgestaltung wird das Messsignal des Messumformers, insbesondere eine Detektion einer Änderung der einwirkenden Kraft, zur Definition eines Zeitintervalls herangezogen, während dem der Parameter ermittelt und/oder während dem der Parameter mit dem Schwellwert verglichen wird. Dadurch können Ursache und Wirkung der Bewegungen der Kraftübertragung festgestellt und zu einer zuverlässigen Bewertung der Signale des Beweglichkeitssensors herangezogen werden. Ausserdem ermöglicht die Definition eines Zeitintervalls eine Eingrenzung und Fokussierung der Ermittlung des Parameters und damit eine effiziente Erfassung und Auswertung.

In einer weiteren Ausgestaltung der Erfindung wird als Aktion eine Warnung und/oder eine Alarmierung ausgegeben und/oder die Anzeige und/oder die Weiterleitung des Messsignals ($S_F$) oder der daraus erzeugten Messwerte wird unterbunden. Dadurch wird der Benutzer auf die Gefahr von Fehlmessungen aufmerksam gemacht und/oder von der Verwendung der Resultate von Fehlmessungen abgehalten.

In einer weiteren, bevorzugten Ausgestaltung der Erfindung weist die Kraftübertragung eine bewegliche Kraftaufnahme und entweder ein Gestänge oder einen Deformationskörper, insbesondere eine Schwenklaststütze, auf. Bei dieser Ausgestaltung ist das erfindungsgemässe Verfahren besonders vorteilhaft, da dieser Typ von Kraftmessvorrichtungen häufig unter schwierigen Betriebsbedingungen eingesetzt wird.

In einem weiteren Ausführungsbeispiel wird die Beweglichkeit der Kraftübertragung bezüglich vorgegebener kartesischer Koordinaten oder vorgegebener Kugelkoordinaten ermittelt und der Parameter anhand dieser koordinatenbezogenen Beweglichkeit oder deren Änderung bestimmt. Dadurch kann eine hohe Präzision der Messungen erreicht werden, da die zur Charakterisierung der Bewegung besonders geeignete räumliche Bewegungsrichtung aufgrund des aus der Konstruktion bekannten Rotationspunktes genauer ermittelt werden kann. Da die Bewegungsfreiheit des Systems bekannt ist, lässt sich mit einer Koordinatentransformation eine starke Vereinfachung erzielen.

Beispielsweise kann durch eine Bestimmung der Beweglichkeit bezüglich Kugelkoordinaten, welche zumindest in einer Koordinate durch die vertikale Richtung vorgegeben sind, der momentane Neigungswinkel $\theta$ der Kraftübertragung berechnet werden. Dabei ist der Neigungswinkel $\theta$ der Differenzwinkel zwischen der Richtung der momentanen Kraftübertragung und der durch die Schwerkraft definierten Vertikalrichtung. Mittels der Bestimmung der Beweglichkeit bezüglich dieser Koordinaten kann demnach ein genauer und zuverlässiger Sensor für die dynamische Neigung für die Kraftübertragung beziehungsweise für das Kraftmessmodul aufgebaut werden.

Aus dem momentanen Neigungswinkel $\theta$ kann die Geschwindigkeit des Neigungswinkels $V_\theta$ durch Differenzieren nach der Zeit berechnet werden. Ausserdem ist, analog zur Varianz eines Signals, die spezifische Winkelenergie $E_\theta$ des Neigungswinkels $\theta$ als Parameter M zur Charakterisierung der Bewegung der Kraftübertragung besonders geeignet. Dabei ist die spezifische Winkelenergie $E_\theta$ proportional zum Quadrat der Geschwindigkeit des Neigungswinkels $V_\theta$:

$$E_\theta \sim V_\theta{}^2.$$

Die Koordinatentransformation der Signalkomponenten kann auf verschiedenste Arten realisiert werden, beispielsweise als Rechenprogramme mit einem Mikroprozessor, als analoge Schaltkreise oder in Form handelsüblicher vorgefertigter Berechnungsmodule. Ausserdem können auch Operationen wie das Differenzieren zur Ermittlung der Geschwindigkeit des Neigungswinkels oder das Quadrieren zur Berechnung der spezifischen Winkelenergie zusammen mit den Transformationen durchgeführt werden. Schliesslich könnten die vorgenannten Operationen auch direkt in der Signalverarbeitung des Beweglichkeitssensors integriert sein, sodass das Ausgangssignal des Beweglichkeitssensors direkt als Parameter zur Charakterisierung der Bewegung der Kraftübertragung beziehungsweise des Kraftmessmoduls zur Verfügung steht.

Selbstverständlich sind obige Ausführungen zur Verarbeitung der Sensorsignale nicht auf winkelabhängige Bewegungen der Kraftübertragung beschränkt sondern können ohne weiteres auch auf translatorische Bewegungen, wie die translatorische Geschwindigkeit und/oder die translatorische Beschleunigung und/oder die translatorische Bewegungsenergie der Kraftübertragung beziehungsweise des Kraftmessmoduls angewendet werden.

Als Parameter M zur Charakterisierung der Bewegung der Kraftübertragung beziehungsweise des Kraftmessmoduls kann anstatt der spezifischen Winkelenergie $E_\theta$ näherungsweise auch die spezifische Energie E*, aus der Summe der Quadrate der Bewegungskomponente $V_x$ in x Richtung und der Bewegungskomponente $V_y$ in y Richtung berechnet werden, gemäss:

$$E^* \sim (V_x)^2 + (V_y)^2.$$

In einem weiteren, bevorzugten Ausführungsbeispiel wird mindestens eine Bewegungsrichtung der Kraftübertragung mit einem Beweglichkeitssensor gemessen und diese mindestens eine gemessene Bewegungsrichtung wird dann gemäss der räumlichen Ausrichtung des Beweglichkeitssensors, gegebenenfalls mittels einer Koordinatentransformation, auf eine weitere Bewegungsrichtung umgerechnet, anhand welcher dann der Parameter M bestimmt wird.

Der Beweglichkeitssensor ist vorzugsweise als richtungssensitiver Beweglichkeitssensor in mindestens einer vorgegebenen Richtung ausgebildet. Durch die Umrechnung oder Koordinatentransformation kann die Messung der Bewegungsrichtung auch ohne spezielle räumliche Ausrichtung des Beweglichkeitssensors auf einfache Weise an eine weitere Bewegungsrichtung, beispielsweise die tatsächliche räumliche Beweglichkeit der Kraftübertragung angepasst werden.

Die Koordinatentransformation wird vorzugsweise durch vorgegebene Konfigurationsparameter definiert, welche sich aus der Einbaulage des Beweglichkeitssensors ergeben. Das bietet den Vorteil, dass durch eine einfache Anpassung der Konfigurationsparameter die Transformation an eine beliebige räumliche oder ebene Einbaulage des Beweglichkeitssensors angepasst werden kann. Somit kann beispielsweise die Bewegungsrichtung der Kraftübertragung in einer Richtung orthogonal zur Richtung des Kraftflusses ohne aufwändige Justierarbeiten des Beweglichkeitssensors ermittelt werden.

In einer weiteren erfindungsgemässen Ausgestaltung ist der Beweglichkeitssensor mit der Kraftübertragung starr verbunden. Dadurch kann die Bewegung der Kraftübertragung direkt und mit hoher Genauigkeit ermittelt werden.

In der erfindungsgemässen Ausgestaltung wird die Kraftmessvorrichtung als modulares System mit mindestens zwei Kraftmessmodulen aufgebaut, welche jeweils einen Messumformer aufweisen. Dadurch können die Messsignale der einzelnen Kraftmessmodule miteinander korreliert und somit Fehlerquellen besonders einfach lokalisiert werden. Vorzugsweise weist jedes Kraftmessmodul jeweils einen Beweglichkeitssensor auf. Der Beweglichkeitssensor kann aber auch in direkter Verbindung mit der Kraftaufnahme, insbesondere der Wägebrücke, stehen und das Messsignal der jeweiligen Module zur Auswertung der Signale des Beweglichkeitssensors heranziehen.

In einer weiteren erfindungsgemässen Ausführung weist das Kraftmessmodul ein Gehäuse auf, welches den Messumformer umschliesst und der Beweglichkeitssensor ist im oder am Gehäuse angeordnet. Dadurch ist der Beweglichkeitssensor von den Bauteilen zur Kraftmessung, insbesondere vom Messumformer und vom Deformationskörper, weitgehend isoliert. Somit kann eine gegenseitige Beeinflussung dieser beiden, im Wesentlichen unabhängigen, Messungen vermieden werden. Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:

Fig. 1     eine beispielhafte Kraftmessvorrichtung 1 in Form einer Waage in beispielhafter Ausgestaltung mit symbolisch dargestellter einwirkender Kraft F, einer Kraftaufnahme 3 und einer Anzeigeeinheit 7 mit Warnhinweis 8;

Fig. 2   eine vereinfachte schematische Zeichnung einer Waage im Schnitt, mit einer Kraftübertragung 40 und einem Beweglichkeitssensor 50, der mit einem Komparator 60 verbunden ist, von welchem ein Ausgabewert an eine Anzeigeeinheit 70 weitergeleitet wird;

Fig. 3   in schematischer Darstellung eine Kraftmessvorrichtung 200 in Form einer Tanklast-Messvorrichtung mit einem beweglichen Kraftmessmodul 201 im Schnitt, welches einen zur Durchführung des erfindungsgemässen Verfahrens geeigneten Beweglichkeitssensor 250 aufweist, welcher über eine Verbindungsleitung 252 mit einem Leitrechner 206 verbunden ist;

Fig. 4   eine vereinfachte schematische Zeichnung einer Kraftmessvorrichtung 200 gemäss Figur 3 zur Gewichtsbestimmung für Fahrzeuge, wobei mindestens ein Kraftmessmodul 201 einen Beweglichkeitssensor 250 aufweist und mit 4a) einem zusätzlichen Beweglichkeitssensors 250 angeordnet an der Wägebrücke 230, mit 4b) Verschmutzungen zwischen den frei beweglichen und den feststehenden Teilen und mit 4c) einer Absenkung der Kraftmessvorrichtung 200 um den Winkel a;

Fig. 5   in schematischer Darstellung ein Kraftmessmodul 201 gemäss Figur 3 mit dem Beweglichkeitssensor 250 in Form eines integrierten Schaltkreises, 5a) als Seitenansicht im Schnitt und 5b) als Schnittbild A-A gemäss Figur 5a);

Fig. 6   einen beispielhaften Verlauf der Messsignale einer Gewichtsmessung mit einem Kraftmessmodul 201 gemäss Figur 5, mit 6a) einem Messsignal $S_F$ der Gewichtsmessung und den dazu korrespondierenden Signalen des Beweglichkeitssensors als 6b) Neigungswinkel $\theta$ und 6c) spezifische Winkelenergie $E_\theta$.

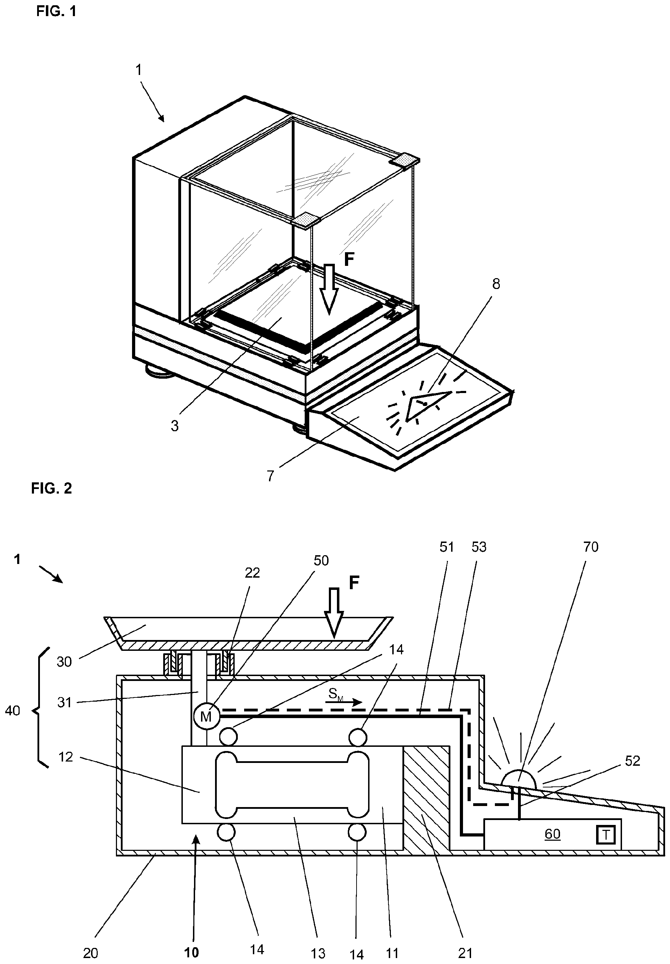

Figur 1 zeigt eine beispielhafte Kraftmessvorrichtung 1 in Form einer Waage in beispielhafter Ausgestaltung mit symbolisch dargestellter Einwirkung der Kraft F, welche auf die Kraftaufnahme 3 in Form einer Messplatte oder Wägeschale wirkt. Mit dem erfindungsgemässen Verfahren und der Vorrichtung wird der Zustand der Kraftmessvorrichtung 1 überwacht und störende, das Messeresultat verfälschende Einflüsse durch eine Anzeigeeinheit 7, beispielsweise durch einen Warnhinweise 8 auf einer Flüssigkristallanzeige, an einen Benutzer kommuniziert.

Die Figur 2 zeigt in schematischer Darstellung eine Kraftmessvorrichtung 1 in Form einer Waage mit einer Kraftmesszelle 10 im Schnitt. Die Kraftmesszelle 10 weist einen feststehenden Teil 11 und einen beweglichen Teil 12 auf, die durch ein Mittelteil 13 miteinander verbunden sind. Die Bewegungen des beweglichen Teils 12 werden von vier Messumformern 14 erfasst und in ein zur einwirkenden Kraft F korrespondierendes Messsignal umgewandelt. Dieses Messsignal wird dann, gegebenenfalls über eine Signalverarbeitung, an eine Anzeigeeinheit 70 oder an eine weitere Verarbeitungsvorrichtung weitergeleitet.

Die Kraftmesszelle 10 ist im Innenraum eines Gehäuses 20 angeordnet und mit ihrem feststehenden Teil 11 über den gehäusefesten Support 21 mit dem Gehäuse 20 starr verbunden. Eine ausserhalb des Gehäuses 20 angeordnete Kraftaufnahme 30 in Form einer Waagschale ist über ein Gestänge 31 mit dem im Innenraum angeordneten Kraftaufnahmeteil 12 der Kraftmesszelle 10 verbunden. Das Gestänge 31 durchdringt das Gehäuse 20 berührungsfrei durch eine Gehäusedurchführung 22. Die Gehäusedurchführung 22 ist derart ausgebildet, dass ein Eindringen von Verunreinigungen möglichst vermieden oder zumindest stark reduziert wird. Die Kraftaufnahme 30 zusammen mit dem Gestänge 31 und dem beweglichen Teil 12 der Kraftmesszelle 10 bilden Teile der beweglichen Kraftübertragung 40 der Kraftmessvorrichtung 1.

An der beweglichen Kraftübertragung 40, in diesem Fall am Gestänge 31, ist ein Beweglichkeitssensor 50 angeordnet, welcher einen die Beweglichkeit der Kraftübertragung charakterisierenden Parameter M erfasst. In diesem Beispiel wird die Geschwindigkeit des Gestänges 31 in horizontaler Richtung ermittelt. Dieser Parameter M kann aber auch die Beschleunigung oder die Bewegungsenergie der Kraftübertragung 40 sein. Ein zum ermittelten Parameter M korrespondierendes Signal $S_M$ des Beweglichkeitssensors 50 wird zwecks weiterer Verarbeitung über eine erste Verbindungsleitung 51 an eine Signalverarbeitungseinheit weitergeleitet, die einen Komparator 60 aufweist. Der Beweglichkeitssensor 50 könnte aber auch an der Kraftaufnahme 30 oder der Kraftmesszelle 10 angeordnet werden.

Der Komparator 60 ist über die zweite Verbindungsleitung 52 mit der Anzeigeeinheit 70, hier in Form einer Leuchtdiode, verbunden und übermittelt die vom Komparator 60 generierten Ausgangssignale an die Anzeigeeinheit 70. Der Komparator 60 kann aber auch im Beweglichkeitssensor 50 integriert sein. In diesem Fall können die vom Komparator 60 generierten Ausgangssignale über eine dritte Verbindungsleitung 53 (gestrichelt gezeichnet) direkt an die Anzeigeeinheit 70 weitergeleitet werden.

Sobald der ermittelte Parameter M, in diesem Ausführungsbeispiel die Bewegungsenergie des Gestänges 31, einen vordefinierten minimalen Schwellwert T nicht erreicht oder unterschreitet, wird durch den Komparator 60 eine Aktion der Waage ausgelöst. Dabei kann der Komparator 60 auch direkt in der Mess- und/oder Auswerteelektronik der Waage, welche die Signale der Messumformer 14 verarbeitet, integriert sein. Ferner kann der Komparator 60 auch als digitale Recheneinheit mit einem vorgeschalteten Analog-Digital-Wandler ausgebildet sein.

Die Anzeigeeinheit 70 kann entweder direkt an der Aussenseite des Gehäuses 20 angeordnet, vom Gehäuse 20 getrennt angeordnet, oder auch innerhalb des Gehäuses montiert sein, sofern die Ausbildung des Gehäuses 20 (schalldurchlässig, transparent) die Wahrnehmung der Anzeige ermöglicht. Speziell auf die auszugebende Mitteilung oder Warnung zugeschnittene Symbole und Warnhinweise können die Übermittlung an eine Person verstärken. So ist die Verwendung allgemein bekannter Piktogramme, wie beispielsweise aus dem Strassenverkehr bekannte Signalschilder oder eigens für die entsprechende Warnung kreierte Symbole, denkbar. Mittels unterschiedlicher Frequenzen der blinkenden visuellen Anzeige oder auch unterschiedlicher Lautstärke und Tonfrequenz der phonetischen Ausgabe kann der Grad der Wichtigkeit der Warnung oder Meldung signalisiert werden. Jede der Verbindungsleitungen 51, 52, 53 im Ausführungsbeispiel von Figur 2 kann entweder eine Kabelverbindung wie ein Signalkabel, ein Bussystem und dergleichen, oder eine kabellose Verbindung sein.

In diesem Ausführungsbeispiel wird für den Parameter M und damit für die Bewegungsenergie des Gestänges 31 ein minimal zulässiger Schwellwert T vordefiniert. Wird dieser minimale Schwellwert bei einem typischen Lastwechsel nicht erreicht, so kann das tiefe Niveau der Bewegungsenergie dahingehend interpretiert werden, dass die Bewegungsfreiheit der Kraftübertragung 40 eingeschränkt ist. Infolgedessen löst der Komparator 60 eine dementsprechende Aktion der Waage, beispielsweise die Anzeige eines Warnhinweises 8 an den Benutzer, aus.

Eine Aktion der Waage bei Nicht-Erreichen, Über- oder Unterschreiten des vordefinierten Schwellwerts T kann im Falle, dass gerade ein Messwert der einwirkenden Kraft aufgenommen werden soll, in einer Wiederholung der Messung bestehen, indem die Messelektronik der Waage einem solchen Messwert keine Stabilität oder eine beträchtliche Unter- oder Überlast zuordnet. Eine Wiederholung der Messung kann auch mehrfach erfolgen, zumindest über einen gewissen tolerablen Zeitraum hinweg, insbesondere jedoch nur so lange, bis die gemessene Bewegungsenergie auf einen Wert oberhalb des Schwellwerts T angestiegen ist. Ist oben erwähnter tolerabler Zeitraum überschritten oder der ermittelte Wert des Parameters M weiterhin zu tief, so kann der Messvorgang unterbrochen und/oder blockiert werden und/oder eine Bereitschaftsanzeige gelöscht werden. Der Wert der gemessenen Bewegungsenergie wird dann zusammen mit einem Zeitwert in ein Logfile in der Signalverarbeitungseinheit, insbesondere in einer darin enthaltenen Speichereinheit abgelegt. Dadurch wird eine Rückverfolgbarkeit möglich.

Als weitere Aktion der Waage, beziehungsweise deren Signalverarbeitungseinheit, kann das Signal $S_M$ des Beweglichkeitssensors 50 oder das Ausgangssignal des Komparators 60 an die Anzeigeeinheit 70 übermittelt und dort entsprechend angezeigt werden. Zudem kann zusätzlich ein Alarmton, eine optische Ausgabe wie ein Blinklicht oder eine, auf einem Display dargestellte Warnung, Information oder Anweisungen zur Fehlerbehebung auf der Anzeigeeinheit 70 ausgegeben werden.

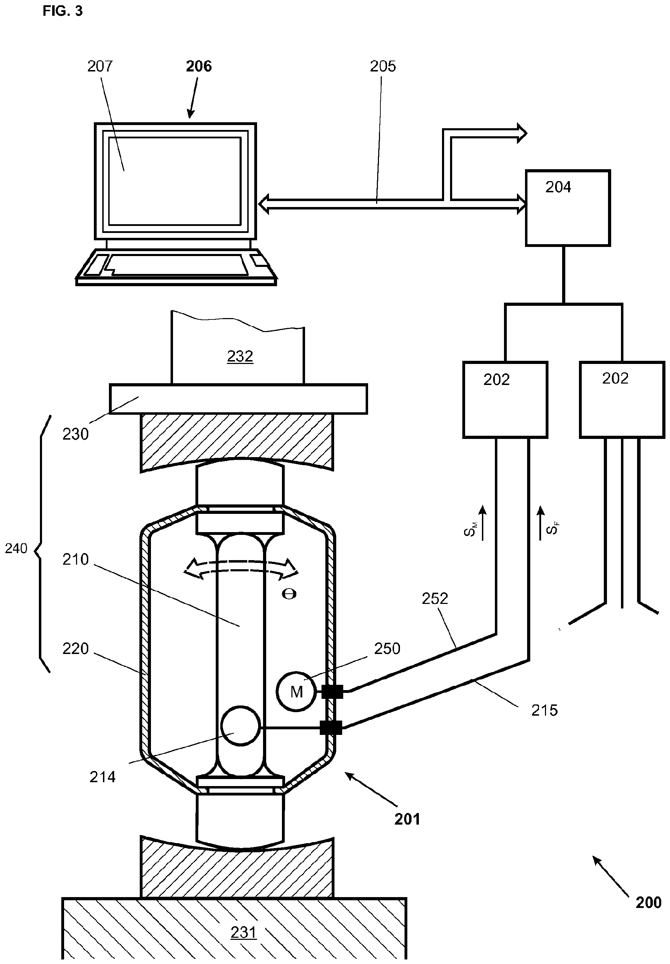

Figur 3 zeigt eine nach dem erfindungsgemässen Verfahren überwachte Kraftmessvorrichtung 200 in Form einer Tanklast-Messvorrichtung mit einem beweglichen Kraftmessmodul 201 im Schnitt. Tanklast-Messvorrichtungen werden insbesondere in Industrieanlagen zur Verwiegung des Inhalts von Becken, Tanks, Reaktorbehältern und dergleichen verwendet. Üblicherweise werden pro zu verwiegendem Behälter mehrere bewegliche Kraftmessmodule 201 zwischen den Füssen 232 des Behälters oder einer entsprechenden Kraftaufnahme 230 und dem Fundament 231 angeordnet. Dadurch steht jeder Fuss 232 des Behälters auf einem beweglichen Kraftmessmodul 201. Um das Gewicht des Behälters und/oder dessen Inhalt zu ermitteln, müssen die von den Kraftmessmodulen 201 erzeugten Messsignale $S_F$ addiert werden, da es sich um die Messsignale von Teilmassen handelt. Deshalb weisen die Kraftmessmodule 201 selbst in der Regel keine Anzeigeeinheit auf. Die Messsignale $S_F$ der einzelnen Kraftmessmodule 201 eines Behälters werden beispielsweise an eine Recheneinheit 206 in Form eines Leitrechners übermittelt, dort ausgewertet und auf der im Leitrechner integrierten Anzeigeeinheit 207, meistens als Teil einer Anlageübersicht dargestellt. Die Messsignale $S_F$ können als analoge Signale vorzugsweise jedoch als digitale Messsignale oder digitale Messwerte ausgebildet sein.

Das Kraftmessmodul 201 weist einen Deformationskörper 210 auf, welcher von einem Gehäuse 220 umschlossen ist. Das Gehäuse 220 ist in der Regel mit dem Deformationskörper 210 verschweisst und gegenüber der Umgebung des Kraftmessmoduls 201 dicht verschlossen. Im Messeinsatz wird sowohl der Deformationskörper 210 als auch das Gehäuse 220 elastisch gestaucht. Der Einfluss des Gehäusewiderstandes auf das Messsignal $S_F$ ist teilweise kompensierbar und die Hysterese des Kraftmessmoduls 201 bezogen auf den Messbereich vernachlässigbar.

Der Beweglichkeitssensor 250 ist über eine Verbindungsleitung 252, einen Transmitter 202, einen Segmentkoppler 204 und ein Bussystem 205 mit einer Recheneinheit 206 verbunden. Das Messsignal $S_F$ des Kraftmessmoduls 201 kann entweder über diese Verbindungen oder über eine eigene Messsignal-Verbindung 215 an die Recheneinheit 206 übertragen werden.

Der Beweglichkeitssensor 250 dient dazu, einen die Beweglichkeit der Kraftübertragung 240 charakterisierenden Parameter M zu ermitteln. Dieser Parameter M wird in Form eines Signals $S_M$ des Beweglichkeitssensors 250 an die Recheneinheit 206 übertragen. Die Kraftübertragung 240 weist die bewegliche Kraftaufnahme 230 und das beweglich schwenkbare Kraftmessmodul 201 auf. Das Kraftmessmodul 201 seinerseits weist einen Deformationskörper 210 mit dem daran befestigten Gehäuse 220 auf. Der Beweglichkeitssensor 250 ist mit dem Gehäuse 220 mechanisch verbunden, so dass die Bewegungen des Kraftmessmoduls 201, dargestellt durch einen gestrichelten Doppelpfeil mit einem Neigungswinkel θ, direkt auf den Beweglichkeitssensor 250 übertragen werden.

Die Recheneinheit 206 ist beispielsweise der Leitrechner eines Prozessleitsystems. Je nach Konfiguration der Kraftmessvorrichtung 200 und der Recheneinheit 206 übermittelt der Beweglichkeitssensor 250 selbständig kontinuierlich oder periodisch und/oder zufällig oder nach Auftreten einer Veränderung entsprechende Signale $S_M$ des Beweglichkeitssensors 250 an die Recheneinheit 206. Selbstverständlich kann die Recheneinheit 206 die Signale auch beim Beweglichkeitssensor 250 kontinuierlich, periodisch oder nach dem Zufallsprinzip abrufen. Da pro Behälter mehrere Kraftmessmodule 201 verwendet werden, können die Signale $S_M$ der Beweglichkeitssensoren 250 der jeweils anderen Kraftmessmoduls 201 zur gegenseitigen Verifizierung oder Überprüfung auf Plausibilität der Signale herangezogen werden. Geeignete, vorgegebene Werte zur Verifizierung können aber auch bereits im Beweglichkeitssensor 250 oder in der Recheneinheit 206 eingespeichert sein. Diese entstammen beispielsweise aus publizierten Tabellen, deren Werte aus anderen Geräten oder aus Daten im Internet stammen. So sind zum Beispiel, gültig für den entsprechenden Einsatzort der Kraftmessvorrichtung, Angaben wie Druck-, Temperatur- und Strahlungsbereiche oder Angaben über Erdbeben-Vibrationen bekannt und können zur Verifizierung der Signale $S_M$ des Beweglichkeitssensors 250 verwendet werden. Sofern ein Teil dieser Signale $S_M$ in der Recheneinheit 206 im Sinne einer Historie gespeichert wird, kann die Analyse dieser Historie zu weiteren Erkenntnissen über den Zustand sowohl des Kraftmessmoduls 201 als auch des Beweglichkeitssensors 250 dienen.

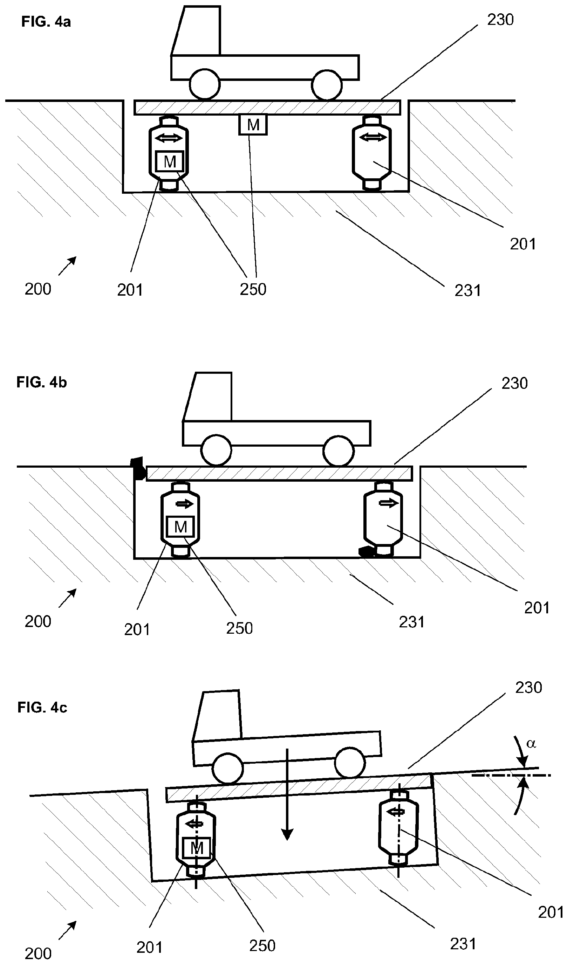

Fig. 4 zeigt eine vereinfachte schematische Zeichnung einer Kraftmessvorrichtung 200 gemäss Figur 3 zur Gewichtsbestimmung bei Fahrzeugen mit mehreren Kraftmessmodulen 201. Dabei stehen die zwei Kraftmessmodule 201 exemplarisch für eine Vielzahl von Kraftmessmodulen 201 da typischerweise die Kraftaufnahme 230 in der Form einer Wägebrücke durch vier Kraftmessmodule 210 gestützt und eine Kraftmessvorrichtung 200 durch mehrere Wägebrücken gebildet wird. Das Fundament 231 ist normalerweise als Vertiefung im Boden ausgebildet um ein bequemes Befahren der Wägebrücken zu ermöglichen. In einer beispielhaften Ausführung ist der Beweglichkeitssensor 250 in einem einzelnen Kraftmessmodul 201 angeordnet. Zur Bestimmung der Beweglichkeit der Kraftaufnahme 230 kann es genügend sein, ein einzelnes Kraftmessmodul 201 mit einem Beweglichkeitssensor 250 auszurüsten. Vorteilhafterweise werden jedoch mehrere Kraftmessmodule 201 mit Beweglichkeitssensoren 250 ausgerüstet, um die Aussagekraft der Messresultate und die Möglichkeiten zur Fehlerlokalisation zu verbessern.

Figur 4a) zeigt in beispielhafter Anordnungen einen zusätzlichen Beweglichkeitssensors 250 an der Kraftaufnahme 230, welche als Wägebrücke ausgebildet ist. Denkbar ist auch, dass nur ein einziger, an der Kraftaufnahme 230 angeordneter Beweglichkeitssensor 250 verwendet wird. Auch in diesem Fall kann die Beweglichkeit der Kraftübertragung und insbesondere die Beweglichkeit der Kraftaufnahme 230 zuverlässig bestimmt werden.

Eine mögliche Fehlerquelle ist in Figur 4b) dargestellt. In diesem Fall sind exemplarisch zwei Verschmutzungen zwischen dem Fundament 231 und den beweglichen Teilen, nämlich der Kraftaufnahme 230 und einem Kraftmessmodul 201, dargestellt. Durch jede dieser Verschmutzungen ist die Bewegungsfreiheit der beweglichen Teile eingeschränkt, was durch die einfach gerichteten Pfeile zum Ausdruck gebracht wird. Diese einseitige Bewegung kann mit dem Beweglichkeitssensor 250 und der dazugehörigen Auswertung festgestellt und dem Benutzer zur Kenntnis gebracht werden.

In Figur 4c) ist eine weitere Fehlerquelle, nämlich eine einseitige Absenkung des Fundaments 231 um einen, möglicherweise sehr kleinen Winkel a, dargestellt. Die Kraftmessmodule 201 gleichen die Schrägstellung aus, indem sie sich stets parallel zur einwirkenden Kraft, nämlich der senkrechten Gravitationskraft, ausrichten. Dadurch verschiebt sich jedoch die Kraftaufnahme 230 und berührt an ihrer Seitenkante das Fundament 231. Auch in diesem Fall ist die Bewegungsfreiheit der Kraftaufnahme entsprechend den einfach gerichteten Pfeilen eingeschränkt. Auch in diesem Fall wird diese Situation dem Benutzer zur Kenntnis gebracht.

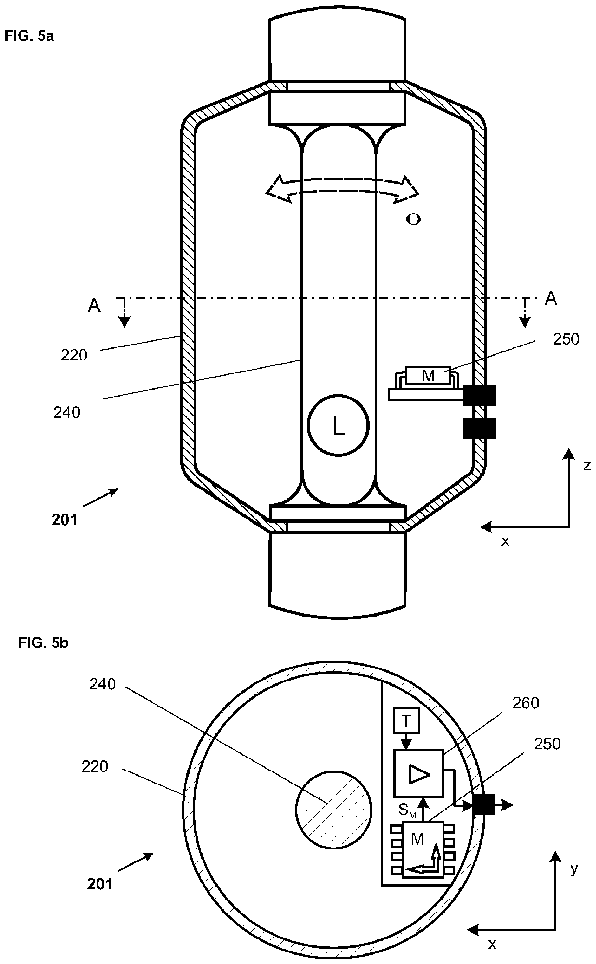

Figur 5 zeigt in schematischer Darstellung ein Kraftmessmodul 201 gemäss Figur 3 mit dem Beweglichkeitssensor 250 in Form eines integrierten Schaltkreises, mit 5a) als Seitenansicht im Schnitt und 5b) als Schnittbild A-A gemäss Figur 5a). Als Beweglichkeitssensor 250 kann ein handelsüblicher Sensor verwendet werden, der zur Bestimmung einer Beweglichkeit oder Bewegung der Kraftübertragung 240 geeignet ist, beispielsweise ein Beschleunigungssensor. In diesem Ausführungsbeispiel ist der Beweglichkeitssensor 250 in der Lage Bewegungen in den räumlichen Richtungen x und y zu erkennen. Die Richtungen x und y bilden eine Ebene, die im Wesentlichen orthogonal zur räumlichen Richtung z und damit zur Richtung der Kraftübertragung 240, nämlich zur Richtung des Kraftflusses im Deformationskörper 210, ausgerichtet ist.

Zur Bestimmung der Beweglichkeit des Kraftmessmoduls 201 und des damit verbundenen Deformationskörpers 210 können auch dreidimensionale Beweglichkeitssensoren 250 eingesetzt werden. Diese Beweglichkeitssensoren erzeugen für jede der drei räumlichen Koordinaten ein entsprechendes Signal. Somit korrespondiert jedes der Signale zu jeweils einer räumlichen Komponente der Bewegung.

Durch den dreidimensionalen Beweglichkeitssensor 250 kann die Orientierung des für die Sensorsignale massgebenden Koordinatensystems durch eine Koordinatentransformation verändert werden. Das bietet den Vorteil, dass durch einen einfachen Satz von Konfigurationsparametern, welche die Koordinatentransformation definieren, die Ergebnisse der Messungen an eine beliebige Einbaulage des Beweglichkeitssensors 250 angepasst werden können. Damit können die Bewegunglichkeit des Deformationskörpers 210 in den beiden, orthogonal zur Richtung des Deformationskörpers 210 ausgerichteten Richtungen x und y auch ohne spezielle Ausrichtung des Beweglichkeitssensors 250 genau, also nicht nur näherungsweise, bestimmt werden.

Aus den Signalen der dreidimensionalen Beweglichkeitssensoren wird der momentane Neigungswinkel θ des Deformationskörpers 210 mittels einer Transformation auf Kugelkoordinaten berechnet. Aus diesem Neigungswinkel θ wird dann die Geschwindigkeit dθ/dt des Neigungswinkels θ durch differenzieren ermittelt und daraus dann die spezifischen Winkelenergie $E_\theta$ gemäss folgender Formel berechnet:

$$E_{\text{-}\theta} \sim (d\theta/dt)^2$$

Diese berechnete spezifische Winkelenergie $E_\theta$ des Neigungswinkels θ dient dann als Parameter M zur Charakterisierung der Bewegung des Deformationskörpers 210.

Als Beweglichkeitssensor 250 wird vorzugsweise ein handelsüblicher Bewegungssensor, beispielsweise das Modell SCA3000 der Firma VTI Technologies, verwendet. Dieser Sensor basiert auf einem kapazitiven Sensorelement mit 3 beschleunigungssensitiven Massen, einer ASIC-basierter Signalverarbeitung und einer digitalen Schnittstelle. Dadurch kann ein sehr kompakter und kostengünstiger Aufbau mit geeignet ausgewerteten Signalen erreicht werden.

Wie in Figur 5b schematisch dargestellt, ist der Beweglichkeitssensor 250 mit einem im Kraftmessmodul 201 angeordneten Komparator 260 verbunden. Das Signal $S_M$ des Beweglichkeitssensors 250, beispielsweise das Signal der Bewegungsenergie $E_\theta$, wird direkt an diesen Komparator 260 weitergeleitet. Der Komparator 260 vergleicht das Signal $S_M$ des Beweglichkeitssensors 250 mit einem vorgegebenen Schwellwert T und löst beim Nicht-Erreichen oder Überschreiten oder Unterschreiten des Schwellwerts eine Aktion der Kraftmessvorrichtung 200 aus. Statt der kontinuierlichen Übertragung des Signals $S_M$ werden somit nur noch einzelne Ereignisse an die Recheneinheit 206 übertragen und somit der Datenfluss stark reduziert.

Selbstverständlich sind obige Ausführung zur Verarbeitung der Sensorsignale nicht auf winkelabhängige Bewegungen der Kraftübertragung beschränkt sondern können ohne weiteres auch auf translatorische Bewegungen, wie die translatorische Geschwindigkeit und/oder die translatorische Beschleunigung und/oder die translatorische Bewegungsenergie der beweglichen Kraftübertragung 40 gemäss Figur 2 angewendet werden.

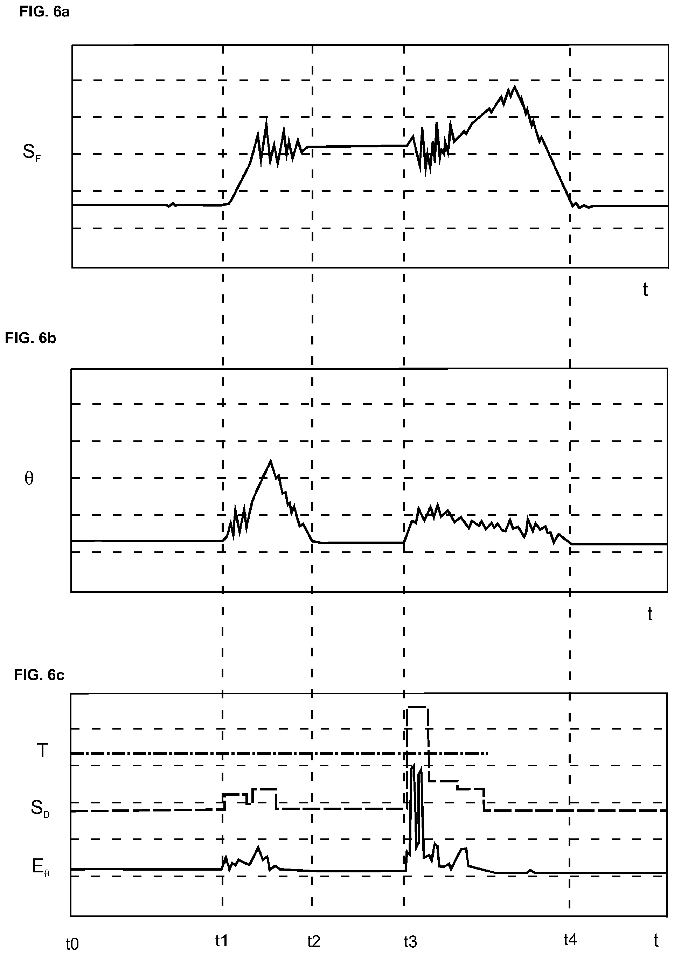

Figur 6 zeigt einen beispielhaften Verlauf der Messsignale einer Gewichtsmessung mit einem Kraftmessmodul 201 gemäss Figur 5, mit 6a) einem Messsignal $S_F$ der Gewichtsmessung und den dazu korrespondierenden Signalen des Beweglichkeitssensors als 6b) Neigungswinkel θ und 6c) spezifische Winkelenergie $E_\theta$ (durchgezogen gezeichnet).

Zusätzlich zum Signal der spezifische Winkelenergie $E_\theta$ ist in Figur 6c) der Verlauf eines Signals $S_D$ des Schleppzeigers (gestrichelt gezeichnet) dargestellt. Der Schleppzeiger übernimmt zu gewissen Zeiten einen zugehörigen Messwert, in diesem Fall das Signal der spezifische Winkelenergie $E_\theta$, und hält diesen Wert für eine bestimmte Zeit konstant. Dadurch können auch kurzfristige Ereignisse wie Signalspitzen zuverlässig erfasst und ausgewertet werden.

Zwischen den Zeitpunkten t0 und t1 befindet sich die Kraftmessvorrichtung in Ruhe, sodass sich das Messsignal $S_F$ und die korrespondierenden Signale des Neigungswinkels θ und der spezifischen Winkelenergie $E_\theta$, als ein weitgehend konstantes Signal ergeben.

Zwischen den Zeitpunkten t1 und t2 wird auf die Kraftmessvorrichtung eine Last in Form eines Fahrzeugs aufgebracht, welches entsprechend Figur 4 auf die Kraftaufnahme fährt. Dadurch steigt das Messsignal $S_F$ entsprechend dem Gewicht des Fahrzeugs auf ein erhöhtes Niveau. Das Signal des Neigungswinkels θ zeigt relativ starke Schwankungen, sodass diese möglicherweise mit einer grösseren Auslenkung der Kraftmessmodule 201 zusammen hängen. Allerdings bleibt die spezifische Winkelenergie $E_\theta$, in diesem Zeitintervall auf einem relativ tiefen Wert. Das könnte daraufhin deuten, dass die freie Beweglichkeit der Kraftübertragung nicht vollständig gewährleistet ist und somit die Kraftübertragung zumindest zu diesem Zeitpunkt teilweise eingeschränkt ist.

Das Signal des Schleppzeigers bleibt unter dem Wert eines vorgegebenen Schwellwerts T. Der Komparator 260 gemäss Figur 5 wird also bei einem Vergleich des Signals $S_D$ des Schleppzeigers mit dem Schwellwert T eine übermässige Abweichung oder ein Nichterreichen feststellt und in Abhängigkeit davon eine Aktion der Kraftmessvorrichtung auslösen.

Zwischen den Zeitpunkten t2 und t3 findet der eigentliche Wägevorgang statt. Die Kraftmessvorrichtung befindet sich in einem Ruhezustand und die Signale zeigen ein weitgehend konstantes Signal.

Zwischen den Zeitpunkten t3 und t4 wird die Kraftmessvorrichtung wieder entlastet, beispielsweise durch Wegfahren des Fahrzeugs. Das Signal des Neigungswinkels θ zeigt weniger starke Schwankungen als beim Beladen; das Signal der spezifischen Winkelenergie $E_\theta$, erreicht hingegen deutlich höhere Werte. Folglich deutet dieser Fall eher auf eine freie Beweglichkeit der Kraftübertragung 240 hin.

Im Falle einer wie in den Figuren 4a) bis 4c) skizzierten Waage für Fahrzeuge ist es besonders günstig, anhand von Zusatzinformationen festzustellen, ob und inwieweit die in den Figuren 6a) bis 6c) dargestellten Signale tatsächlich eine fehlende oder unterdrückte freie Beweglichkeit der Kraftübertragung charakterisieren. Der die freie Beweglichkeit charakterisierende Parameter M ist einerseits durch die Masse des auf die Wägeplattform auffahrenden oder von dieser herab fahrenden Fahrzeugs und andererseits durch dessen Geschwindigkeit beim auf- oder herab fahren beeinflusst. Zur Ermittlung dieses die beiden genannten Grössen miteinander verknüpfenden Ausdrucks kann beispielsweise das Wägeresultat herangezogen werden, um somit letztendlich eine Diagnose der vorhandenen oder fehlenden Beweglichkeit zu stützen.

Anhand dieser Resultate kann der Benutzer der Kraftmessvorrichtung oder eine nachgeschalteten Signalverarbeitung darüber entscheiden, ob die Messung als gültig beurteilt wird oder ob diese gegebenenfalls zu verwerfen ist.

Die Erfindung wurde in bevorzugten Ausgestaltungen beschrieben und dargestellt. Anhand der erfindungsgemässen Lehre sind jedoch weitere fachmännische Ausgestaltungen realisierbar.

**Bezugszeichenliste**

| | |
|---|---|
| 1, 200 | Kraftmessvorrichtung |
| 3, 30, 230 | Kraftaufnahme |
| 7, 70, 207 | Anzeigeeinheit |
| 8 | Warnhinweis |
| 10 | Kraftmesszelle |
| 11 | feststehender Teil |
| 12 | beweglicher Teil |
| 13 | Mittelteil |
| 14, 214 | Messumformer |
| 15 | Kraftübertragung |
| 20, 220 | Gehäuse |
| 21 | Support |
| 22 | Gehäusedurchführung |
| 31 | Gestänge |
| 40, 240 | Kraftübertragung |
| 50, 250 | Beweglichkeitssensor |
| 51, 52, 53, 252 | Verbindungsleitung |
| 60, 260 | Komparator |
| 201 | Kraftmessmodul |
| 202, 204 | Transmitter / Segmentkoppler |
| 205 | Bussystem |
| 206 | Recheneinheit / Leitrechner |
| 210 | Deformationskörper |
| 215 | Messsignal-Verbindung |
| 230 | Kraftaufnahme |
| 231 | Fundament |
| 232 | Behälterfuss |
| 240 | Kraftübertragung |

| | |
|---|---|
| $\theta$ | Neigungswinkel |
| $V_\theta$ | Geschwindigkeit des Neigungswinkels |
| $E_\theta$ | spezifische Winkelenergie |
| $E^*$ | spezifische Bewegungsenergie |
| $F$ | einwirkende Kraft |
| $M$ | Parameter |
| $S_D$ | Signal des Schleppzeigers |
| $S_F$ | Messsignal |
| $S_M$ | Signal des Beweglichkeitssensors |
| $T$ | Schwellwert |
| $V_x, V_y$ | Bewegungskomponente |

**Patentansprüche**

1. Verfahren zur Überwachung des Zustandes einer Kraftmessvorrichtung (200), insbesondere einer Wägevorrichtung, die als modulares System mit mindestens zwei Kraftmessmodulen (201) aufgebaut ist, welche jeweils einen Messumformer (214) aufweisen,
mit einer Kraftaufnahme (230) und einer beweglichen Kraftübertragung (240), welche eine auf die Kraftmessvorrichtung (200) wirkende Kraft den Messumformern (214) zuleitet, welche ein zur einwirkenden Kraft korrespondierendes Messsignal ($S_F$) erzeugen, das dann zur Anzeige gebracht oder zur weiteren Verarbeitung weitergeleitet wird, **dadurch gekennzeichnet, dass** mindestens ein die freie Beweglichkeit der Kraftübertragung (240) oder deren zeitliche Änderung charakterisierender Parameter (M) mittels eines Beweglichkeitssensors (250) ermittelt wird,
dass der Parameter (M) mit mindestens einem Schwellwert (T) verglichen wird und in Abhängigkeit des Vergleichsergebnisses ein Normalzustand oder eine Einschränkung der freien Beweglichkeit der Kraftübertragung (240) detektiert wird, und
dass im Falle einer festgestellten Einschränkung der freien Beweglichkeit eine Aktion der Kraftmessvorrichtung (200) ausgelöst wird.

2. Verfahren nach Anspruch 1, **dadurch gekennzeichnet, dass** mit dem Parameter (M) im wesentlichen die translatorische Geschwindigkeit und/oder die Winkelgeschwindigkeit und/oder die translatorische Beschleunigung und/oder die Winkelbeschleunigung und/oder die Bewegungsenergie, insbesondere die spezifische Winkelenergie ($E_\theta$), der Kraftübertragung (240) charakterisiert wird.

3. Verfahren nach Anspruch 1 oder 2, **dadurch gekennzeichnet, dass** mit dem Parameter (M) die Beweglichkeit in mindestens einer Richtung charakterisiert wird, welche im Wesentlichen orthogonal zur Richtung des Kraftflusses in der Kraftübertragung (240) ausgerichtet ist.

4. Verfahren nach einem der Ansprüche 1 bis 3, **dadurch gekennzeichnet, dass** der Schwellwert (T) vorgegeben ist und/oder bei einem Nicht-Erreichen oder bei einem Überschreiten oder bei einem Unterschreiten des Schwellwertes (T) eine Aktion der Kraftmessvorrichtung (200) ausgelöst wird.

5. Verfahren nach einem der Ansprüche 1 bis 4, **dadurch gekennzeichnet, dass** das Messsignal ($S_F$) des Messumformers (240), insbesondere eine Detektion einer Änderung der einwirkenden Kraft, zur Definition eines Zeitintervalls herangezogen wird, während dem der Parameter (M) ermittelt und/oder während dem der Parameter (M) mit dem Schwellwert (T) verglichen wird.

6. Verfahren nach einem der Ansprüche 1 bis 5, **dadurch gekennzeichnet, dass** als Aktion eine Warnung und/oder eine Alarmierung ausgegeben wird und/oder die Anzeige und/oder die Weiterleitung des Messsignals ($S_F$) oder der daraus erzeugten Messwerte unterbunden wird.

7. Verfahren nach einem der Ansprüche 1 bis 6, **dadurch gekennzeichnet, dass** die Beweglichkeit der Kraftübertragung (240) bezüglich vorgegebener kartesischer Koordinaten oder vorgegebener Kugelkoordinaten ermittelt wird und dass der Parameter (M) anhand dieser koordinatenbezogenen Beweglichkeit oder deren Änderung bestimmt wird.

8. Verfahren nach einem der Ansprüche 1 bis 7, **dadurch gekennzeichnet, dass** mindestens eine Bewegungsrichtung der Kraftübertragung (240) mit dem Beweglichkeitssensor (250) gemessen wird und diese mindestens eine gemessene Bewegungsrichtung dann gemäss der räumlichen Ausrichtung des Beweglichkeitssensors (250), gegebenenfalls mittels einer Koordinatentransformation, auf eine weitere Bewegungsrichtung umgerechnet wird, anhand welcher dann der Parameters (M) bestimmt wird.

9. Kraftmessvorrichtung (200), insbesondere Wägevorrichtung, mit einer Kraftaufnahme (230) und beweglichen Kraftübertragung (240), welche eine auf die Kraftmessvorrichtung (200) wirkende Kraft einem Messumformer (214) zuführt, welcher ein zur einwirkenden Kraft korrespondierendes Messsignal ($S_F$) erzeugt, das dann an eine Anzeigeeinheit (207) oder an eine weitere Verarbeitungsvorrichtung übertragbar ist, **dadurch gekennzeichnet, dass** die Kraftmessvorrichtung (200) als modulares System mit mindestens zwei Kraftmessmodulen (201) aufgebaut ist, welche jeweils einen Messumformer (214) aufweisen, **dass** die bewegliche Kraftübertragung (240) mit einem Beweglichkeitssensor (250) mechanisch verbunden ist, welcher zur Ermittlung mindestens eines die freie Beweglichkeit der Kraftübertragung (240) oder deren zeitliche Änderung charakterisierenden Parameters (M) nach einem der Ansprüche 1 bis 8 geeignet ist, und **dass** der Beweglichkeitssensor (250) mit einem Komparator (260) elektrisch verbunden ist, mit dem der ermittelte Parameter (M) mit mindestens einem Schwellwert (T) verglichen wird und in Abhängigkeit des Vergleichsergebnisses eine Aktion der Kraftmessvorrichtung (200) ausgelöst wird.

10. Kraftmessvorrichtung (200) nach Anspruch 9, **dadurch gekennzeichnet, dass** der Beweglichkeitssensor (250) zur Erfassung der translatorischen Geschwindigkeit und/oder der Winkelgeschwindigkeit und/oder der translatorischen Beschleunigung und/oder der Winkelbeschleunigung und/oder der Bewegungsenergie der Kraftübertragung (240) ausgebildet ist.

11. Kraftmessvorrichtung (200) nach Anspruch 9 oder 10, **dadurch gekennzeichnet, dass** der Beweglichkeitssensor (250) zur Erfassung der Beweglichkeit in mindestens einer Richtung ausgebildet ist, welche im wesentlichen orthogonal zur Richtung des Kraftflusses in der Kraftübertragung (240) ausgerichteten ist.

12. Kraftmessvorrichtung (200) nach einem der Ansprüche 9 bis 11, **dadurch gekennzeichnet, dass** die Kraftübertragung (240) eine bewegliche Kraftaufnahme (230) und einen Deformationskörper (210), insbesondere eine Schwenklaststütze, aufweist.

13. Kraftmessvorrichtung (200) nach einem der Ansprüche 9 bis 12, **dadurch gekennzeichnet, dass** der Beweglichkeitssensor (250) mit der Kraftübertragung (240) starr verbunden ist.

14. Kraftmessvorrichtung (200) nach einem der Ansprüche 9 bis 12, **dadurch gekennzeichnet, dass** die Kraftaufnahme (230) eine Wägebrücke ist, wobei der Beweglichkeitssensor (250) in direkter Verbindung mit der Kraftaufnahme (230) steht.

15. Kraftmessvorrichtung (200) nach Anspruch 9, **dadurch gekennzeichnet, dass** mindestens ein Kraftmessmodul (201) ein Gehäuse (220) aufweist, welches den Messumformer (214) umschliesst, und dass der Beweglichkeitssensor (250) im oder am Gehäuse (220) angeordnet ist.

**Claims**

1. Method for monitoring the condition of a force-measuring device (200), specifically a weighing device, the force-measuring device (200) is structured as a modular system with at least two force-measuring modules (201), each of which comprises a measurement transducer (214),

with a force receiver (230) and a movable force-transmitting portion (240) through which a force that is acting on the force-measuring device (200) is transmitted to the measurement transducers (214) which generate a measurement signal ($S_F$) corresponding to the applied force, whereupon the signal is brought into the form of a display indication or passed along for further processing, **characterized in that**

at least one parameter (M) is being determined by a mobility sensor (250), the at least one parameter (M) characterizes the free mobility of the force-transmitting portion (240) or a change in said free mobility over time,

that the parameter (M) is compared to at least one threshold value (T) and that, dependent on the result of the comparison, either a normal condition or a restriction of the free mobility of the force-transmitting portion (240) is detected, and that

in the case where a restriction of the free mobility has been detected, an action of the force-measuring device (200) is triggered.

2. Method according to claim 1, **characterized in that** the quantity being **characterized by** the parameter (M) is, in essence, the translatory velocity and/or the angular velocity and/or the translatory acceleration and/or the angular acceleration and/or the kinetic energy, in particular the specific angular-movement energy ($E_\Theta$) of the force-transmitting portion (240).

3. Method according to claim 1 or 2, **characterized in that** the quantity being **characterized by** the parameter (M) is the mobility in at least one direction which is oriented essentially orthogonal to the direction of the force flow path in the force-transmitting portion (240).

4. Method according to one of the claims 1 to 3, **characterized in that** the threshold value (T) is a given, predetermined value and if said threshold value (T) is not attained and/or if it is exceeded and/or if it is crossed in the downward direction, an action of the force-measuring device (200) is triggered.

5. Method according to one of the claims 1 to 4, **characterized in that** the measurement signal (SF) of the measurement transducer (240), in particular a signal indicating that a change in the input force was detected, is used to define a time interval during which the parameter (M) is determined and/or during which the parameter (M) is compared to the threshold value (T).

6. 6. Method according to one of the claims 1 to 5, **characterized in that** the action being triggered consists of issuing a warning and/or issuing an alarm and/or cancelling the display and/or ceasing to pass on the measurement signal (SF) or the measurement values generated from it.

7. Method according to one of the claims 1 to 6, **characterized in that** the mobility of the force-transmitting portion (240) is determined in reference to given Cartesian coordinates or given spherical coordinates, and that the parameter (M) is determined based on the mobility or change in mobility as expressed in terms of these coordinates.

8. Method according to one of the claims 1 to 7, **characterized in that** the movement of the force-transmitting portion (240) in at least one direction is measured with the mobility sensor (250) and that said movement in at least one direction is then arithmetically converted, according to the spatial orientation of the mobility sensor (250), to a further direction of movement, relative to which direction the parameter (M) is determined, wherein said arithmetic conversion may be performed by means of a coordinate transformation.

9. Force-measuring device (200), specifically a weighing device, with a force receiver (230) and a movable force-transmitting portion (240) through which a force that is acting on the force-measuring device (200) is transmitted to a measurement transducer (214) which generates a measurement signal ($S_F$) corresponding to the applied force, whereupon the signal can then be transmitted to an indicator unit (207) or to a further processing device,

**characterized in that**

the force-measuring device (200) is structured as a modular system with at least two force-measuring modules (201), each of which comprises a measurement transducer (214),

the movable force-transmitting portion (240) is mechanically connected to a mobility sensor (250) which is suitable to determine a parameter (M) according to one of the claims 1 to 8, the parameter (M) characterizes the free mobility of the force-transmitting portion (240) or a change in said free mobility over time,

that the mobility sensor (250) is connected to a comparator (260) which is operable to compare the parameter (M) to at least one threshold value (T) and that, dependent on the result of the comparison, an action of the force-measuring device (200) is triggered.

10. Force-measuring device (200) according to claim 9, **characterized in that** the mobility sensor (250) is designed to determine the translatory velocity and/or the angular velocity and/or the translatory acceleration and/or the angular acceleration and/or the kinetic energy of the force-transmitting portion (240).

**11.** Force-measuring device (200) according to claim 9 or 10, **characterized in that** the mobility sensor (250) is designed to determine the mobility in at least one direction which is substantially orthogonal to the direction of the force flow path in the force-transmitting portion (240).

**12.** Force-measuring device (200) according to one of the claims 1 to 11, **characterized in that** the force-transmitting portion (240) comprises a movable force receiver (230) and a deformable body (210), in particular a self-aligning strut.

**13.** Force-measuring device (200) according to claim 12, **characterized in that** the mobility sensor (250) is directly connected to the movable force receiver (230).

**14.** Force-measuring device (200) according to one of the claims 9 to 12, **characterized in that** the mobility sensor (250) is rigidly connected to the force-transmitting portion (240).

**15.** Force-measuring device (200) according to claim 9, **characterized in that** at least one of the force-measuring modules (201) comprises a housing (220) which encloses the measurement transducer (214), and that the mobility sensor (250) is arranged inside said housing (220) or on said housing (220).

**Revendications**

**1.** Procédé pour la surveillance de l'état d'un dispositif de mesure de force (200), en particulier un dispositif de pesage, lequel est construit comme un système modulaire avec au moins deux modules de mesure de force (201) présentant respectivement un transducteur de mesure (214),
avec un capteur de force (230) et une transmission de force mobile (240) transmettant une force agissant sur le dispositif de mesure de force (200) aux transducteurs de mesure (214), lesquels produisent un signal de mesure ($S_F$) correspondant à la force appliquée, lequel est ensuite affiché ou retransmis pour un traitement supplémentaire, **caractérisé en ce que**
au moins un paramètre (M) caractérisant la mobilité libre de la transmission de force (240) ou la modification de celle-ci dans le temps est déterminé au moyen d'un capteur de mobilité (250),
**en ce que** le paramètre (M) est comparé avec au moins une valeur seuil (T) et un état normal ou une restriction de la mobilité libre de la transmission de force (240) est détecté(e) en fonction du résultat de la comparaison, et
**en ce qu'**en cas d'une restriction constatée de la mobilité libre, une action du dispositif de mesure de force (200) est déclenchée.

**2.** Procédé selon la revendication 1, **caractérisé en ce que** le paramètre (M) permet de caractériser essentiellement une vitesse en translation et/ou la vitesse angulaire et/ou l'accélération en translation et/ou l'accélération angulaire et/ou l'énergie cinétique, en particulier l'énergie angulaire spécifique ($E_\Theta$), de la transmission de force (240).

**3.** Procédé selon la revendication 1 ou 2, **caractérisé en ce que** le paramètre (M) permet de caractériser la mobilité dans au moins une direction orientée essentiellement orthogonalement à la direction du flux de force dans la transmission de force (240).

**4.** Procédé selon l'une des revendications 1 à 3, **caractérisé en ce que** la valeur seuil (T) est prédéfinie et/ou lorsque la valeur seuil (T) n'est pas atteinte ou lors d'un dépassement au-dessus ou en dessous de celle-ci, une action du dispositif de mesure de force (200) est déclenchée.

**5.** Procédé selon l'une des revendications 1 à 4, **caractérisé en ce que** le signal de mesure ($S_F$) du transducteur de mesure (240), en particulier une détection d'une modification de la force appliquée, est utilisé(e) pour la définition d'un intervalle de temps, pendant la détermination du paramètre (M) et/ou pendant que le paramètre (M) est comparé avec la valeur seuil (T).

**6.** Procédé selon l'une des revendications 1 à 5, **caractérisé en ce que** l'action consiste en la délivrance d'un avertissement et/ou d'une alerte, et/ou en l'interruption de l'affichage et/ou de la transmission du signal de mesure ($S_F$) ou des valeurs de mesure générées à partir de celui-ci.

**7.** Procédé selon l'une des revendications 1 à 6, **caractérisé en ce que** la mobilité de la transmission de force (240) est déterminée par rapport à des coordonnées cartésiennes prédéfinies ou de coordonnées sphériques prédéfinies, et **en ce que** le paramètre (M) est déterminé à l'aide de cette mobilité dépendante des coordonnées ou de la modification de celle-ci.

**8.** Procédé selon l'une des revendications 1 à 7, **caractérisé en ce qu'**au moins une direction de mouvement de la transmission de force (240) est mesurée avec le capteur de mobilité (250) et cette au moins une direction de mouvement mesurée est ensuite convertie en une autre direction de mouvement permettant de déterminer par la suite le paramètre (M), selon l'orientation spatiale du capteur de mobilité (250), le cas échéant à l'aide d'une transformation de coordonnées.

**9.** Dispositif de mesure de force (200), en particulier un dispositif de pesage, avec un capteur de force (230) et une transmission de force mobile (240) transmettant une force agissant sur le dispositif de mesure de force (200) à un transducteur de mesure (214), lequel produit un signal de mesure ($S_F$) correspondant à la force appliquée, lequel peut ensuite être transmis à une unité d'affichage (207) ou à un dispositif de traitement supplémentaire, **caractérisé en ce que** le dispositif de mesure de force (200) est construit comme un système modulaire avec au moins deux modules de mesure de force (201) présentant respectivement un transducteur de mesure (214), **en ce que** la transmission de force mobile (240) est reliée mécaniquement à un capteur de mobilité (250) adapté pour déterminer au moins un paramètre (M) caractérisant la mobilité libre de la transmission de force (240) ou la modification de celle-ci dans le temps, selon l'une des revendications 1 à 8, et **en ce que** le capteur de mobilité (250) est électriquement relié à un comparateur (260) permettant de comparer le paramètre (M) déterminé avec au moins une valeur seuil (T), et une action du dispositif de mesure de force (200) est déclenchée en fonction du résultat de la comparaison.

**10.** Dispositif de mesure de force (200) selon la revendication 9, **caractérisé en ce que** le capteur de mobilité (250) est conçu pour détecter la vitesse en translation et/ou la vitesse angulaire et/ou l'accélération en translation et/ou l'accélération angulaire et/ou l'énergie cinétique de la transmission de force (240).

**11.** Dispositif de mesure de force (200) selon la revendication 9 ou 10, **caractérisé en ce que** le capteur de mobilité (250) est conçu pour détecter la mobilité dans au moins une direction orientée essentiellement orthogonalement à la direction du flux de force dans la transmission de force (240).

**12.** Dispositif de mesure de force (200) selon l'une des revendications 9 à 11, **caractérisé en ce que** la transmission de force (240) présente un capteur de force mobile (230) et un corps de déformation (210), en particulier un support de charge pivotant.

**13.** Dispositif de mesure de force (200) selon l'une des revendications 9 à 12, **caractérisé en ce que** le capteur de mobilité (250) est relié fixement à la transmission de force (240).

**14.** Dispositif de mesure de force (200) selon l'une des revendications 9 à 12, **caractérisé en ce que** le capteur de force (230) est un pont de pesée, le capteur de mobilité (250) étant en liaison directe avec le capteur de force (230).

**15.** Dispositif de mesure de force (200) selon la revendication 9, **caractérisé en ce qu'**au moins un module de mesure de force (201) possède un boîtier (220) entourant le transducteur de mesure (214), et **en ce que** le capteur de mobilité (250) est disposé dans ou sur le boîtier (220).

FIG. 1

FIG. 2

FIG. 3

FIG. 4a

230

M

201

200      201      250      231

FIG. 4b

230

M

201

200      201      250      231

FIG. 4c

230

α

M

200      201      250      231      201

FIG. 5a

FIG. 5b

**FIG. 6a**

$S_F$

t

**FIG. 6b**

$\theta$

t

**FIG. 6c**

T

$S_D$

$E_\theta$

t0          t1          t2          t3          t4          t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0254594 A
- DE 10253601
- US 4804053 A